# EUROPÄISCHE PATENTSCHRIFT

(11) **EP 2 004 483 B1**
(45) Veröffentlichungstag und Bekanntmachung des Hinweises auf die Patenterteilung: **23.05.2012**
(21) Anmeldenummer: 07701909.9
(22) Anmeldetag: 02.03.2007
(51) Int. Cl.: B64C 15/14, B64C 27/28, B64C 29/00

(54) **FLUGZEUG MIT DER EIGENSCHAFT ZU SCHWEBEFLUG, SCHNELLEM VORWÄRTSFLUG, GLEITFLUG, KURZSTART, KURZLANDUNG, SENKRECHTSTART UND SENKRECHTLANDUNG**
AIRCRAFT HAVING THE CHARACTERISTIC OF HOVERING FLIGHT, FAST FORWARD FLIGHT, GLIDING FLIGHT, SHORT TAKE OFF, SHORT LANDING, VERTICAL TAKE OFF AND VERTICAL LANDING
AERONEF CAPABLE DE VOL STATIONNAIRE, DE VOLER RAPIDEMENT VERS L'AVANT, DE PLANER, DE DECOLLER SUR DE COURTES DISTANCES, D'ATTERRIR SUR DE COURTES DISTANCES, DE DECOLLER A LA VERTICALE ET D'ATTERRIR A LA VERTICALE

(30) Priorität: 03.03.2006 CH 345062006
(43) Veröffentlichungstag der Anmeldung: 24.12.2008
(73) Patentinhaber: Posva, David, 4132 Muttenz (CH)
(72) Erfinder: Posva, David, 4132 Muttenz (CH)
(86) Internationale Anmeldenummer: PCT/CH2007/000109
(87) Internationale Veröffentlichungsnummer: WO 2007/098634

(56) Entgegenhaltungen:
- DE-B- 1 173 344
- DE-U1- 29 916 203
- FR-A- 1 133 316
- FR-A- 1 320 875
- FR-A- 2 077 758
- GB-A- 731 413
- US-A- 2 988 301
- US-A- 3 038 683
- US-A- 3 275 267
- US-B1- 6 561 456

## Beschreibung

### Definitionen:

**Schwebeflug:** Flugzustand mit keiner oder **kleiner Horizontalgeschwindigkeit,** bei welcher der benötigte **Auftrieb** durch das **Beschleunigen ruhender Luft nach unten** erzeugt wird. (Üblicherweise und bei der hier beschriebenen Erfindung wird die Luft mithilfe, um die Hochachse drehender, Rotoren nach unten beschleunigt. In der Helikopterliteratur wird der Begriff zum Teil nur für den Flugzustand ohne Horizontalgeschwindigkeit verwendet. In dieser Patentbeschreibung gilt, dass sich das Flugzeug im Schwebeflug befindet, solange die Schwebeflugrotoren Luft durch die Flügelluken nach unten blasen.)

**Vorwärtsflug:** Flugzustand mit, nach unten beschränkter (=Minimalgeschwindigkeit kann nicht unterschritten werden), **Horizontalgeschwindigkeit** nach vorne, bei welcher der benötigte Auftrieb durch **aerodynamische Eigenschaften starrer Flügel** erzeugt wird.
(Üblicherweise und bei der hier beschriebenen Erfindung wird der Auftrieb durch einen Druckunterschied zwischen Flügelunterseite und Flügeloberseite erzeugt, durch Beschleunigung der oberhalb des Flügel strömenden Luft (Unterdruck oben) und, nach Bedarf, einem Anstellen der Flügelunterseite gegen die strömende Luft (Überdruck unten, Verstärkung des Unterdrucks oben)).

### Physikalische, aerodynamische, ökonomische & technische Rahmenbedingungen für Flugzeug mit senkrecht Start- und Landeeigenschaften.

a) Der **Schwebeflug** ist **energieintensiver** und entsprechend teurer als der Vorwärtsflug mit einem Flächenflugzeug.
b) Der **Leistungsbedarf** im Schwebeflug **steigt überproportional mit** zusätzlichem **Gewicht.**
c) Der **Leistungsbedarf** im Schwebeflug **sinkt** (meist unterproportional) **durch Vergrösserung** der **Rotorfläche** bei gleichem Gewicht.
d) Der **Leistungsbedarf** im Schwebeflug ist stark von der optimalen Auslegung, Konstruktion und Abstimmung der Rotoren abhängig (optimale kleine Steigung, optimales Profil (Form, Dicke & Tiefe), Länge, Schränkung (=Varianz der Steigung mit zunehmendem Radius), Anzahl der Rotorblätter, Verformung bei entsprechender Belastung, Abstimmung auf Antrieb).
   (Siehe Buch: "Flugmechanik der Hubschrauber" von Walter Bittner, ISBN 3-540-23654-6)
e) Ein für den **Schwebeflug** (=die Beschleunigung ruhender Luft) **optimierter Rotor** ist, auch bei Anpassung der Steigung, ein relativ **schlechter Propeller** für die Beschleunigung schnell einströmender Luft. (Insbesondere Schränkung und Profil können nicht für beide Geschwindigkeitsbereiche optimal sein.)
   (Gut im Schwebeflug = eher schlecht im Vorwärtsflug - und umgekehrt)
f) Das Vorwärtsfliegen im **Schwebeflug** (als Helikopter) ist, im Vergleich zu Flächenflugzeugen, mit **zunehmender Geschwindigkeit,** immer **ineffizienter** und erreicht bereits vor der halben Schallgeschwindigkeit eine kaum zu überwindende Hürde.
   (Es gibt Gedankenspiele von Sikorsky und anderen Helikopterherstellern für Helikopter, welche schneller fliegen können sollten und sich trotzdem die vorwärts bewegende Rotorenspitze die Schallmauer nicht durchbrechen muss. Die Machbarkeit ist aber stark umstritten und besonders effizient werden auch diese "Helikopter" im Vorwärtsflug kaum sein...)
g) Der stabile **Übergang vom Schwebeflug zum Vorwärtsflug** und zurück, ermöglicht einen **effizienten Vorwärtsflug** als Flächenflugzeug, stellt aber eine **grosse Herausforderung** an das ganze Flugzeugsystem dar.
   =>
   Dieser **Übergang muss** von der
   **Flugzeugform** (gute und eigenstabile Langsamflugeigenschaften bei geschlossenen, teilweise, sowie ganz offenen Rotorluken),
   der Anordnung der **Rotoren** (Eigenstabilität im Schwebeflug, als auch Vorwärtsflug; Gute Verteilung um Schwerpunkt)
   und **Propeller** Position (Guter Hebel für Korrekturkräfte; Keine störenden Turbulenzen und Kräfte durch das Schwenken der Achse aus der Vertikalen in die Horizontale),
   der **Antriebssysteme** (Genügend Leistungsreserve; Schnelle Reaktion auf Steuersignale),
   den **Steuerklappen** (Gute Hebelwirkung, gute Wirksamkeit im entsprechenden Geschwindigkeitsbereich)
   und der **Steuerung** aller dynamischer Systeme (Computersystem steuert und stabilisiert das Flugzeug aufgrund der Pilotenbefehle und den Informationen von den Lage-, Geschwindigkeits-, Beschleunigungs- und Leistungs-Sensoren)
   **optimal unterstützt werden.**
h) Eine, im Verhältnis zu üblichen Flächenflugzeugen, grosse **Flügelfläche,** ergibt eine kleine Flächenbelastung mit entsprechend guten **Langsamflugeigenschaften,** erzeugt aber einen (im Vergleich mit einem klassischen Flächenflugzeug) etwas grösseren **Luftwiderstand,** vor allem beim schnellen Vorwärtsflug.

### Ziel aufgrund der Rahmenbedingungen: Eigenstabiles Flächenflugzeug mit Senkrechtstart- und Senkrechtlandeeigenschaften.

=> Leicht; genug Power für Senkrechtstart; Rotoren für Schwebeflug optimiert; Vorwärtsflug-Antrieb im Schwebeflug zur Unterstützung und Steuerung; Übergang Schwebeflug / Vorwärtsflug jederzeit stabil; Schwebeflug-Komponenten sollen Vorwärtsflug nur minimal behindern; Vorwärtsflug schneller und ökonomischer als Helikopter; Start und Landung auch im Vorwärtsflug (wie Flächenflugzeug) problemlos und ökonomisch.

### Stand der Technik

Zur Zeit ist **nur ein Typ** von Flächenflugzeugen mit **Senkrechtstarteigenschaften im** (militärischen) **Einsatz:** Der in den 60er Jahren entwickelte **Harrier** von Hawker Siddeley (GB), sowie dessen Nachfolgemodelle. Zwei weitere Typen sind in der militärischen **Erprobungs- und Entwicklungsphase:** Der Bell Boeing **V-22 Tiltrotor** (WO91/05704) und der **F-35B** von Lockheed Martin. Alle zivilen Projekte sind an den hohen Anforderungen vorerst gescheitert.

Durch moderne für ihre Stabilität extrem leichte und gut formbare Werkstoffe (Insbesondere der Faserverbundstoff: **CFK**), wurden leichte und auch für den zivilen Bereich ökonomische Flugzeuge mit Senkrechtstarteigenschaften denkbar.

Moderne Varianten der **Antriebssysteme:** Gasturbine, Ottomotor, Wankelmotor, Raketentriebwerk, Elektrogenerator + Hochleistungs-Elektronik + Elektromotor, sind, im Vergleich zu 1965 als der Harrier entwickelt wurde, wesentlich **zuverlässiger, leichter, leistungsfähiger und besser steuerbar** geworden.

**Moderne Computersysteme** in Kombination mit modernen Lage- und Beschleunigungs-sensoren, erlauben eine **rascher und zuverlässiger** reagierende Steuerung als dies von **Menschenhand** möglich ist und damit einen stabilen Flug auch bei schwierig zu kontrollierenden Gegebenheiten.

Aufgrund dieser Fortschritte entstehen zur Zeit weltweit verschiedenste Ideen zur Entwicklung neuartiger Flugzeuge mit Senkrechtstarteigenschaften: Skycar (Paul S. Moller), X-Hawk (WO2006/072960: Rafi Yoeli), Ringflügel (US6254032: Franz Bucher) und wahrscheinlich noch viele andere...

Das Dokument DE 29916203 zeigt auch ein Seukrechstart- und landefähiges Fluggerät und wird als nächsliegender Stand der Technik betrachtet.

### Nachteile bestehender Ansätze (Unterschiede zu diesem Ansatz)

Keine Aufteilung für **Schwebeflug optimierte** Komponenten (Rotoren) / für **Vorwärtsflug optimierte** Komponenten (Flügel, Propeller). => Verhältnismässig viel grösserer Leistungsbedarf für Schwebeflug (Harrier, F-35B, Skycar, X-Hawk, Ringflügel); respektive weniger effizienter Vorwärtsflug (Tiltrotor/V22) (=Alle erwähnten Ansätze)

Die für den Vorwärtsflug übergrossen und nicht optimalen **Schwebeflug-Komponenten** werden **im Vorwärtsflug nicht versteckt:** Tiltrotor, Skycar, X-Hawk, Ringflügel

**Kein** Wechsel in den ökonomischeren **Vorwärtsflug:** X-Hawk

Die **schwenkbaren Antriebskomponenten,** sind nicht so angebracht, dass der **Ausstossstrahl** die **Haupttragflächen** und andere Komponenten nicht **überstreicht.** => Verluste und Unstabilitäten durch, je nach Schwenkwinkel unterschiedliche, Turbulenzen: Tiltrotor, Ringflügel

**Keine Eigenstabilität durch die Flugzeugform** im Übergangsbereich vom Schwebeflug in den Vorwärtsflug und zurück: Skycar, Ringflügel, Tiltrotor

Keine **freie Sicht** in alle Flugrichtungen (oben, vorne, **unten**): Harrier, F-35B, Skycar, X-Hawk, Ringflügel, Tiltrotor (=Alle erwähnten Ansätze)

Keine **Verteilung** der **Antriebsleistung** pro Rotor auf mehrere Motoren: Alle erwähnten Ansätze.

Keine **Möglichkeit** zur **Gleitfluglandung:** Skycar, X-Hawk, Ringflügel

Keine Möglichkeit zur **Gleitfluglandung am selben Aufsetzpunkt** wie bei der Schwebefluglandung: Alle erwähnten Ansätze.

Keine **Notfallbooster / Feststoffraketen** zur Dämpfung eines Aufpralls beim Leistungsausfall respektive Leistungsabfall kurz vor der Landung im Schwebeflug: Alle erwähnten Ansätze.

### Aufgabe

Die Aufgabe besteht darin eine Flugzengform und Flugzeugkomponenten so zu gestallten und zusammenzustellen, sodass diese im Zusammenspiel sowohl einen stabilen Senkrechtstart, Schwebeflug und Senkrechtlandung ermöglichen, aber auch den stabilen Übergang in einen stabilen und ökonomischen Vorwärtsflug und zurück in den Schwebeflugmodus.

### Lösung der Aufgabe

Diese Aufgabe wird gelöst durch ein Flugzeug gemäß dem Anspruch 1.

Die Lösung der Aufgabe wird vor allem durch 2 in ihrer Kombination neuartige Konzepte erreicht:
1. Die **Auftrennung der Schwebeflugkomponenten und der Vorwärtsflug-komponenten:** Die **Rotoren (20)** sind **für** den **Schwebeflug** optimiert und auch nur im Schwebeflug verwendet, während die für den **Vorwärtsflug** benötigten **Antriebe** vor allem für die Geschwindigkeiten des Vorwärtsfluges optimiert sind, aber auch für die Steuerung und allenfalls Unterstützung im Schwebeflug verwendet werden können.
2. Das **Verbergen der Schwebeflug-Rotoren (20)** im Vorwärtsflug in grossen verschliessbaren Tragflächenluken (10), sodass die Rotorenkreisflächenbelastung im Schwebeflug in einem tragbaren Rahmen bleibt und im Vorwärtsflug eine fast klassische, eigenstabile Flugzeugform entsteht, mit aerodynamisch guten Tragflächen mit einer ungewöhnlich grossen Flügeltiefe (nur leicht erhöhter Luftwiderstand gegenüber klassischer Flügeltiefe von klassischen Flächenflugzeugen der entsprechenden Grössenordnung), aber guten Langsamflugeigenschaften.

### Beschreibung der Wirkung und des Zusammenwirkens der Patentansprüche

### Weitere Eigenschaften und Wirkung Anspruch 1a:

Bei geschlossenen Tragflächenluken entstehen praktisch luftdicht verschlossene, luftwiderstandarme als auch gut auftriebswirksame Tragflächen. Dadurch sind hohe Vorwärtsfluggeschwindigkeiten und Verbrauchswerte fast wie bei vergleichbaren Flächenflugzeugen möglich. (Etwas grösserer Verbrauch durch zusätzliches Gewicht der Schwebeflugkomponenten und leicht grösseren Luftwiderstand durch die um die Schwebeflugkomponenten herum konstruierten Flügel.) Der Verbrauch des beschriebenen Flugzeuges ist bei gleicher Geschwindigkeit deutlich kleiner als der Verbrauch vergleichbarer Helikopter bei Reisefluggeschwindigkeit. Bei einer vergleichbaren Motorisierung erreicht das Flugzeug auch eine deutlich höhere Geschwindigkeit.

Der Leistungsbedarf ist im Schwebeflug im Vergleich zu anderen Senkrechtstartern, bei gleichem Startgewicht, aus zwei Gründen kleiner: 1.) die Schwebeflugrotoren werden nur für den Schwebeflug verwendet und können deshalb genau für den Schwebeflug optimiert werden (weniger Verluste). 2.) Die Schwebeflugrotoren werden im Vorwärtsflug aerodynamisch gut verborgen, sodass die Rotorenfläche relativ grösser dimensioniert werden können. (Siehe Rahmenbedingungen Punkt c))

Durch die Möglichkeit zum Schwebeflug wird das Flugzeug unabhängig von Start-/Landebahn.

Da die Rotoren seitlich vom Flügel umhüllt sind, ist das Flugzeug (im Gegensatz zu Helikopter oder Tiltrotor) weniger anfällig bei der Berührung mit Seilen, Kabeln, Antennen oder anderen Hindernissen.

### Weitere Eigenschaften und Wirkung Anspruch 1b:

Durch die Anordnung der drehbaren Lamellen entlang der Hauptflugrichtung, kann im Schwebeflug die Ausströmende Luft rasch und präzise dosiert nach Links oder Rechts ausgelenkt werden. Dadurch kann das Flugzeug, ohne dass das ganze Flugzeug um die Längsachse gekippt werden muss, sehr präzise nach Links oder Rechts beschleunigt werden. Durch die Auslenkung bei den vorderen Rotoren nach Rechts oder Links und der entgegengesetzten Auslenkung bei den hinteren Rotoren kann das Flugzeug um die Hochachse rotiert werden.

Durch ein spiegelsymmetrisches Auslenken des Luftstrahles nach Aussen (Weg vom Flugzeug) oder Innen (unter das Flugzeug), kann (insbesondere im Bereich des Bodeneffektes) der erzeugte Auftrieb sehr rasch variiert werden.

Da sich die Lamellen sehr schnell von der offenen in die geschlossene Position (und umgekehrt) schwenken lassen, kann der durch die Rotoren erzeugt Luftstrom beim Übergang vom Schwebeflug in den Vorwärtsflug genau entsprechend dem Bedarf gestoppt oder zugelassen werden. (Insbesondere kann ein meistens unerwünschter Luftstrom von unten durch die Flügelluken nach oben, schnell gestoppt werden.)

Da die Lamellen im Schwebeflug durch die ausströmende Luft überströmt werden, entsteht durch diese eine gewisse Verlustleistung (Aerodynamischer Widerstand der geöffneten Lamellen im durch die Rotoren erzeugten Luftstrom.); Andererseits wird durch die Längslamellen (insbesondere im vorderen und hinteren Bereich der Luken) der Verlust durch den Drall des durch die Rotoren erzeugten Luftstromes reduziert, was die Leistungsausbeute leicht erhöht.

Eine völlig glatte Oberfläche liesse sich mit einer Lamellenkonstruktion nur äusserst aufwändig erreichen, dies ist jedoch auf der Flügelunterseite aus aerodynamischer Sicht auch nicht so zwingend. Spezielle Krümmungen sind mit einer Lamellenkonstruktion ebenfalls eher schwierig, die Flügelunterseite darf aber problemlos praktisch planar sein. Im weiteren muss davon ausgegangen werden, dass die Lamellenkonstruktion nicht ganz luftdicht schliesst, was aber vernachlässigt werden kann, wenn der Lukenschliessmechanismus auf der Oberseite die Luke besser abdichtet.

### Weitere Eigenschaften und Wirkung Ansprüche 2 & 3:

Durch die Verwendung seitlich verschiebbarer individuell gekrümmter Elemente für die Verschliessung der Oberseite der Tragflächenluken, wird dem aerodynamischen Bedarf der Tragflächenoberseite besser Rechnung getragen. Die Ränder der Elemente sind dabei so zu gestalten (Verzahnt und mit Dichtungsmaterial), dass beim Zusammenschieben entlang der Führungskante eine praktisch luftdichte Oberfläche entsteht. Zusätzlich kann das Trägerrollo aus einem Material (z.B: Gummi) bestehen (oder damit beschichtet sein), sodass dieses ebenfalls zur Abdichtung beiträgt. Im weiteren entsteht durch die zusammengeschobenen Elemente eine sehr glatte und optimal gekrümmte Tragflächenoberseite. (Die Tragflächenoberseite soll aus aerodynamischen Gründen eine gewisse Wölbung und meistens eine glatte Oberfläche aufweisen.)

Durch das vollständige Verschieben der Elemente neben die Tragflächenluke entsteht durch diese keinerlei Verluste im Schwebeflug.

Das Versorgen der Elemente seitlich neben der Luke benötigt einen entsprechenden Raum im Flügel oder dem allenfalls angrenzenden Rumpf. Im weiteren dauert das Öffnen und Schliessen der Luke etwas länger als zum Beispiel bei einem Verschluss durch Lamellen. Auch kann der Luftstrom nicht wie bei den Lamellen ausgelenkt werden.

### Weitere Eigenschaften und Wirkung Anspruch 4:

Durch die Verwendung mehrer Motoren pro Rotor wird eine höhere Ausfallsicherheit erreicht und die ganze Leistung muss nicht zwingend von einem einzelnen Motor erbracht werden. Dadurch kann der Motor im Flügel kürzer sein (kleinere vertikale Achslänge), was eine dünnere Flügelgestaltung ermöglicht. (Zu dicke Flügel ergeben grösseren Luftwiderstand im Vorwärtsflug.)

### Weitere Eigenschaften und Wirkung Anspruch 1c:

Für die Antriebsgondeln sind vorzugsweise Impeller ("Propeller in Rohr") zu verwenden. Je nach gewünschter Reisegeschwindigkeit sind jedoch auch freidrehende Propeller oder Strahlturbinen oder Raketendüsen verwendbar.

Durch die Verwendung schwenkbarer, nach unten geschwenkter und gegen Hinten abgesetzter, Antriebsgondeln, kann der Schwebeflug zusätzlich unterstützt werden, insbesondere ist eine zusätzliche Steuerung um die Flugzeugquerachse möglich. Dazu kann das Flugzeug im Schwebeflug durch die Modifikation des Schwenkwinkels und der erzeugten Kraft, nach vorne und zurück beschleunigt werden.

Beim Schwenken der Antriebsgondeln in die Horizontale und zurück in die Vertikale überstreicht der Ausstossstrahl weder die Haupttragflächen noch den Rumpf oder andere aerodynamisch bedeutende Flugzeugteile, sodass keine schwenkwinkelabhängigen Turbulenzen oder unerwünschte Kräfte entstehen. Auch durch den Luftansaugkegel wird die Aerodynamik und Eigenstabilität des Flugzeuges kaum negativ beeinflusst.

Durch das Schwenken der Antriebsgondeln in die Horizontale, wird das Flugzeug, entsprechend den Anweisungen des Piloten, in den Geschwindigkeitsbereich für den Vorwärtsflug beschleunigt, und somit der kontinuierlicher Wechsel aus dem Schwebeflug in den Vorwärtsflug ermöglicht. Für den Wechsel aus dem Geschwindigkeitsbereich des Vorwärtsfluges in den Schwebeflug, kann einerseits durch die Reduktion der Antriebsleistung, aber auch (erst bei kleinen Geschwindigkeiten sinnvoll) kontinuierlich nach unten und sogar leicht gegen vorne geschwenkt, das Flugzeug abgebremst werden.

Durch das Schwenken der Antriebsgondeln wird ein sogenanntes Thrustvectoring ermöglicht, was insbesondere die Manövrierbarkeit im Langsamflug stark verbessert.

### Weitere Eigenschaften und Wirkung Anspruch 5:

Durch die Sichtlücke zwischen den beiden Flügelspitzen herrscht für den Piloten völlig ungehinderte Sicht von senkrecht nach unten über nach vorne bis senkrecht nach oben. Dies ist insbesondere für sehr steile bis senkrechte Landeanflüge von grossem Vorteil.

### Weitere Eigenschaften und Wirkung Anspruch 6:

Durch die Stangenspitze wird weder die Sicht, noch die Aerodynamik wesentlich beeinträchtigt.

Die Stangenspitze hilft aber bei Kollisionen mit Seilen, Kabeln oder Antennen im Flug und beschützt die Cockpitverglasung vor verdrängbaren Hindernissen beim Ausrollen und beim Manövrieren am Boden. (Die damit entstehenden Konvexe Hülle ist ein zusätzlicher Sicherheitsgewinn im Vergleich zu Helikopter und Tiltrotor neben den umhüllten Rotoren und Impellern.)

### Weitere Eigenschaften und Wirkung Anspruch 7:

Durch die Flugeigenschaften folgend aus Anspruch 1a und unterstützt durch die gute Sicht aus Anspruch 5, kann derselbe steile Anflugwinkel mit dem selben Aufsetzpunkt im Landeverfahren in beiden Flugmodus verwendet werden.

Damit kann auf eigenen Wunsch, oder nach äusseren Gegebenheiten (Landefeld besetzt, Anweisung durch Flugleitstelle, schlechte Sicht) oder technischen Umständen (Leistungsabfall, Leistungsausfall, knapper Treibstoff) zwischen beiden Flugmodus gewechselt werden ohne den Anflug abzubrechen. Allerdings erfolgt der Anflug im Vorwärtsflugmodus (allenfalls im Gleitflug) mit wesentlich kleinerem Anstellwinkel und entsprechend grösserer Sink- und Vorwärtsgeschwindigkeit. Bei der Vorwärtsfluglandung wird eine relativ kurze Ausrollstrecke (96) benötigt. Die Ausrollstrecke bei der Vorwärtsfluglandung kann, durch den Einsatz der Rotoren (20) oder Feststoffraketen (110) zum Aufsetzzeitpunkt, weiter stark minimiert werden.

Bei der Landung im Schwebeflugmodus, wird keine Ausrollstrecke benötigt.

### Weitere Eigenschaften und Wirkung Anspruch 8:

Die Wölbklappe erlaubt nicht nur die Regulierung des Auftriebs, sondern auch einen langsamen Vorwärtsflug, beim Übergang vom Schwebeflug in den Vorwärtsflug, ohne oder mit einem minimalen Anstellwinkel des Rumpfes, sodass die, durch die Rotoren (20) in den Haupttragflächen nach Anspruch 1a erzeugten, Kräfte die Beschleunigung des Flugzeuges gegen vorne nicht abbremsen.

### Weitere Eigenschaften und Wirkung Anspruch 9:

Feststoffraketen (110) sind im Verhältnis zur gespeicherten Energie sehr leicht und klein, sowie lange haltbar.

Sie können im Notfall, kurz vor dem Aufsetzzeitpunkt oder beim Aufsetzen gezündet, bei teilweisem oder vollständigem Ausfall der Auftriebssysteme im tiefen Schwebeflug, den Aufprall minimieren oder die Kollision mit Hindernissen im Ausrollweg verhindern.

Weil die erzeugte Kraft bei den brennenden Feststoffraketen (110) nicht gut gesteuert werden kann, sind die Feststoffraketen individuell durch die Auslassöffnungen (111) abstossbar. (Werden losgelassen, sobald die entsprechende Kraft stört und nicht sinnvoll anders kompensiert werden kann. Durch eine Parallelauslegung der Feststoffraketen, kann die Kraft in einem gewissen Rahmen gesteuert oder erneuert werden.)

(Beim Ausfall von Schwebeflugkomponenten oberhalb einer Sicherheitshöhe, ist der Wechsel in den Vorwärtsflug meistens der sinnvollere Ausweg, als eine Schwebefluglandung mit Raketenunterstützung.)

### Zusammenwirkung der Patentansprüche:

a) Genug **Leistung und Leistungsreserven in** Verbindung mit einer optimierten Beschleunigung ruhender Luft nach unten, sodass das Flugzeuggewicht sicher im **Schwebeflug** getragen werden kann:
   **Anspruch 1a:** Mehrere relativ grosse optimierte Rotoren (20).
   **Anspruch 4:** Bei Bedarf mehrere Motoren (51/52) pro Rotor.
   **Anspruch 9:** Feststoffraketen (110) als zusätzliche Leistungsreserve bei Leistungsabfall der Motoren.
b) Eine **Lagesteuerung und Stabilisierung im Schwebeflug** um alle 3 Flugzeugachsen und in alle 3 Raumrichtungen:
   **Anspruch 1a:** Rotationen und Stabilisation um die Längs- und Querachse durch individuelle Leistungsregulierung der um den Schwerpunkt herum angeordneten Rotoren (20). Translation nach Oben und Unten durch die kollektive Leistungsregulierung der Rotoren (20).
   **Anspruch 1b:** Translation seitwärts durch das kollektive Auslenken mittels der Längslamellen (31). Rotation um die Hochachse durch die gegensätzliche Auslenkung der vorderen gegen die hinteren Lamellen (31).
   **Anspruch 1c:** Translation gegen Vorne und Hinten durch das Schwenken der Propellergondeln (62). Rotation und Stabilisation um die Querachse durch die Leistungsregulierung des Propellerantriebes (62).
   **Anspruch 5:** Durch die spezielle Tragflächenform können die vorderen Rotoren (10) weiter vorne angebracht werden, wodurch diese einen grösseren Hebelarm und einen entsprechend grösseren Einfluss auf das Rotationsmoment um die Querachse haben.
c) **Steuerungsmöglichkeiten,** gute **Unterstützung** (Anordnung der Antriebe, stabilisierende Form), keine unnötige Behinderung (Sicht, Turbulenzen) für die **Übergänge vom Schwebeflug in den Vorwärtsflug** und zurück:
   **Anspruch 1a:** Die grosse Flügelfläche erlaubt, im Zusammenspiel mit der annähernden Deltaform und der klassischen V-Form (=Flügelenden etwas höher als Flügelwurzeln) der Flügel einen (um die Längs- und Hochachse) eigenstabilen Langsamflug.
   **Anspruch 1a:** Der Verschliessmechanismus der Rotorenluken (10) erlaubt den Wechsel in den Vorwärtsflug.
   **Anspruch 1b:** Der Lukenschliessmechanismus nach Anspruch 1b erlaubt ein schnelles schliessen und öffnen der Luken (10) gegen unten. Dadurch kann, bei genügend grosser Vorwärtsgeschwindigkeit, in Kombination mit einem Ausfahren der Wölbklappen (100) nach Anspruch 8 und einer Erhöhung des Anstellwinkels, relativ schnell vom Auftrieb durch die Schwebeflugrotoren (20) nach Anspruch 1a auf den Auftrieb durch die aerodynamischen Eigenschaften der Tragflächen gewechselt werden (= Übergang Schwebeflug -> Vorwärtsflug). Beim Übergang vom Vorwärtsflug in den Schwebeflug können, im entsprechenden Geschwindigkeitsbereich und dem passenden Anstellwinkel, die Luken (10) oben geöffnet sein, die Schwebeflugrotoren (20) bereits beschleunigt werden und die Längslamellen (31) nach Anspruch 1b genau dann langsam öffnen, wenn der Schub der Rotoren (20) den Druck unterhalb des Flügels zu kompensieren vermag. (= Kein abrupter Wechsel der Kräfte, keine Luftströmung durch die Rotorenluken (10) von unten nach oben.)
   **Anspruch 1c:** Durch das nach hinten abgesetzte Höhenruder (60) erfolgt eine klassische Eigenstabilisation um die Querachse. Durch die schwenkbare Höhenruder-Propellergondel-Kombination (60) nach Anspruch 1c erfolgt eine aktive Steuerung um die Querachse (Vertikalkomponente). Dabei überstreicht der Ausstossstrahl der Propellergondel (62) keine Flugzeugteile, sodass auch keine schwenkwinkelabhängigen Turbulenzen entstehen.
   **Anspruch 5:** Dank der Sichtlücke nach Anspruch 5 hat der Pilot freie Sicht in alle sinnvoll möglichen Flugrichtungen. Dies bedeutet er sieht ungehindert in einem stets sinnvoll breiten Bogen (72) von senkrecht nach unten über horizontal nach vorne bis senkrecht nach oben; sowie etwas mehr als die gesamte vordere obere Viertel-Hemisphäre (Spitzen links und rechts; Bogen von vorne bis oben).
   **Anspruch 8:** Dank der grossen Klappen (100) am Flügelende, welche als Kombination von Querruder und Wölbklappe verwendet werden, kann bereits bei geringer Vorwärtsgeschwindigkeit um die Längsachse gesteuert werden. Zusätzlich kann mit den Wölbklappen (100) der durch die Flügel erzeugte Auftrieb gesteuert werden, sodass das Flugzeuggewicht bereits bei geringer Vorwärtsgeschwindigkeit getragen wird, respektive der, bei der Vorwärtsbeschleunigung ungewünschte, Anstellwinkel des Flugzeuges verringert werden kann.
   **Ansprüche 2 & 3:** Der Lukenschliessmechanismus (40) auf der Flügeloberseite nach den Ansprüchen 2 resp. 3 ist zwar langsamer zum Öffnen und Schliessen als jener auf der Flügelunterseite. Andererseits verändert sich dadurch, während dem kontinuierlichen Öffnen, der zunehmende Luftwiderstand und der abnehmende Auftrieb ebenfalls kontinuierlich, sodass der Pilot und die Flugzeugsteuerung nicht von einer plötzlichen Veränderung überrascht werden (beim Schliessen sind die Veränderungen entgegengesetzt, sodass das Flugverhalten kontinuierlich besser wird). Ebenfalls ist zu bemerken, dass das Flugzeug auch mit oben geöffneten Luken (10) stabil als Flächenflugzeug im Vorwärtsflug betrieben werden kann, wenn auch mit wesentlich erhöhtem Leistungsbedarf. Das Flugzeug ist so zu dimensionieren, dass Geschwindigkeitsbereiche für den Vorwärtsflug mit gegen oben geöffneten Luken (10) und den Schwebeflug überlappen.
   Im diesem für beide Flugmodi stabil fliegbaren Geschwindigkeitsbereich kann (bei stets gegen oben geöffneten Luken) durch das An- und Abstellen der Rotoren (20) in Synchronisation mit dem Öffnen und Schliessen der Lamellen (31) gegen unten, ein jederzeit stabiler und reversibler Wechsel vom Vorwärtsflug in den Schwebeflug und umgekehrt stattfinden.
d) Möglichkeiten zur kontinuierlichen **Vorwärtsbeschleunigung** bis in den Geschwindigkeitsbereich des Vorwärtsfluges und **Abbremsung** der Vorwärtsgeschwindigkeit bis zu Stillstand **im Schwebeflug:**
   **Anspruch 1c:** Durch das nach Hinten schwenken des Antriebes (62) nach Anspruch 1c, entsteht eine Vorwärtskomponente der erzeugten Kraft, sodass das Flugzeug kontinuierlich vorwärts beschleunigt werden kann.
      Durch den Luftwiderstand einerseits und andererseits durch die Möglichkeit den Antrieb (62) nach Anspruch 1c leicht nach vorne zu schwenken, wird das Flugzeug abgebremst.
e) Möglichst wenig **Behinderung** (Luftwiderstand, Instabilisierung, Gewicht) durch die Schwebeflugkomponenten **im Vorwärtsflug:**
   **Anspruch 1a:** Die verborgenen Schwebeflugkomponenten (20) stören kaum aerodynamisch im Vorwärtsflug. (Einzig durch die ungewöhnlich grosse Flügeltiefe erzeugen die Flügel einen minimal grösseren Luftwiderstand als es ein üblicher Flügel für ein gewöhnliches Flächenflugzeug erzeugen würde.)
   Die Schwebeflugkomponenten (20) erzeugen im verborgenden Zustand auch keine zusätzlichen Turbulenzen oder Ungleichgewichte.
   Durch die optimale Auslegung der Schwebeflugkomponenten (20) ist das Zusatzgewicht relativ klein.
   **Anspruch 1b:** Die Längslamellen (31) auf der Flügelunterseite ermöglichen zwar keine vollständig glatte Flügeloberfläche, dies ist jedoch auf der Flügelunterseite, dank des dort üblicherweise herrschenden Überdruckes weniger störend.
   Auch eine spezielle Krümmung der Oberfläche wird in den meisten Teilen der Flügelunterseite nicht benötigt.
   Durch die Längsausrichtung der Lamellen (31) ist auch nur ein sehr kleiner Teil der Flügelunterseite von, durch die Unebenheiten erzeugten, Oberflächenturbulenzen betroffen. **Ansprüche 2 & 3:** Dank den nach aerodynamischen Bedürfnissen optimal gekrümmten und passgenau ineinander passenden Elementen (41) des Verschliessmechanismus (40), nach den Ansprüchen 2 respektive 3, auf der Flügeloberseite, entsteht ein luftdichter Flügel mit guten Auftriebswerten, kleinem Luftwiderstand und gewünscht guten Langsamflugeigenschaften.
f) **Ökonomischer** Vortrieb und ökonomische Steuerung **im Vorwärtsflug:**
   **Anspruch 1a:** Die verborgenen Schwebeflugkomponenten (20) stören höchsten minimal aerodynamisch im Vorwärtsflug.
   **Anspruch 1c:** Durch die klassische V-Form und annähernden Deltaform der Flügel in Kombination mit den klassischen Seitenleitwerken ergibt sich eine Eigenstabilität um die Längs- und Hochachsen im Vorwärtsflug, sodass kaum unerwünschte Ruderausschläge nötig sind. Mittels der klassischen Querruder (100) kann um die Längsachse gesteuert werden. Durch die klassisch nach hinten abgesetzten Seiten- und Höhenruder kann gesteuert um die Hoch- und Querachse rotiert werden. Durch das nach hinten abgesetzte Höhenleitwerk (respektive Höhenruder) ergibt sich eine klassische Eigenstabilität um die Querachse.
   Durch die, in den mit dem Höhenruder (60) verbundenen Antriebsgondeln (62) befindlichen (und für diesen Flugzustand optimierten) Vorwärtsflugantriebe, wird das Flugzeug gesteuert und optimal angetrieben.
g) Möglichst **geringes Gewicht** (Trockengewicht + kein unnötiger Treibstoffverbrauch):
   Je **kleiner der Leistungsbedarf** im **Schwebeflug** desto **leichter** das Gesamtgewicht der **Motoren.**
   **Anspruch 1a:** Durch die grossen Tragflächenluken (10) nach **Anspruch 1a** werden grosse Rotorendurchmesser ermöglicht, was den Leistungsbedarf im Schwebeflug verkleinert. Durch die vollständige Optimierung der Rotoren (20) für den Schwebeflug (ideale Steigung, ideale Blatttiefe, ideales Blattprofil da keine Aufgabe im Vorwärtsflug) wird der Leistungsbedarf im Schwebeflug, im Vergleich zu Helikoptern und anderen Ansätzen für Flugzeuge mit Senkrechtstarteigenschaften, weiter minimiert. (Zusätzlich ist keine zyklische und wohl auch keine kollektive Blattverstellung für die Steuerung nötig, was auch eine einzigartige optimale Rotorblattverwindung ermöglicht.)
   Durch die Leistungsreserve in den relativ leichten Feststoffraketen (110), kann die Leistungsreserve der Motoren (51/52) etwas eingeschränkt werden.
   Durch einen ökonomischen **Vorwärtsflug** während des stark überwiegenden Flugdaueranteiles, wird viel **Treibstoff eingespart,** was das Startgewicht ebenfalls minimiert.
   **Ansprüche 1a, 1b & 2 resp. 3:** Durch das vollständige Verstecken der Schwebeflugkomponenten (20) in einem nahezu optimalen Flügel ergeben sich, im Vergleich mit einem klassischen Flächenflugzeug, fast keine zusätzlichen Verluste im Vorwärtsflug.
   **Anspruch 1c:** Durch die weitgehende Optimierung des Vorwärtsflugantriebes (62) für den schnellen Reiseflug ergibt sich, im Vergleich zu Helikoptern und anderen Ansätzen für Flugzeuge mit Senkrechtstarteigenschaften, eine beträchtliche Treibstoffeinsparung. (Im Vergleich mit klassischen Flächenflugzeugen sollten kaum nennenswerte Unterschiede bestehen, da deren Antriebe ebenfalls nicht nur völlig für den Reiseflug optimiert sein können, da sich dadurch extrem lange Startrollstrecken und schlechte Steigleistungen ergeben würden.)
   **Anspruch 8:** Durch die grosse Wölbklappe (100) und die grosse Flügelfläche ergeben sich gute Langsamflugeigenschaften, auch wenn das Flügelprofil eher für den schnellen Reiseflug optimiert wird.
   Die im Vorwärtsflug **eigenstabile Flugzeugauslegung** als Ganzes, reduziert die benötigten Steuerausschläge im Reiseflug, was ebenfalls zu Treibstoffeinsparungen führt.

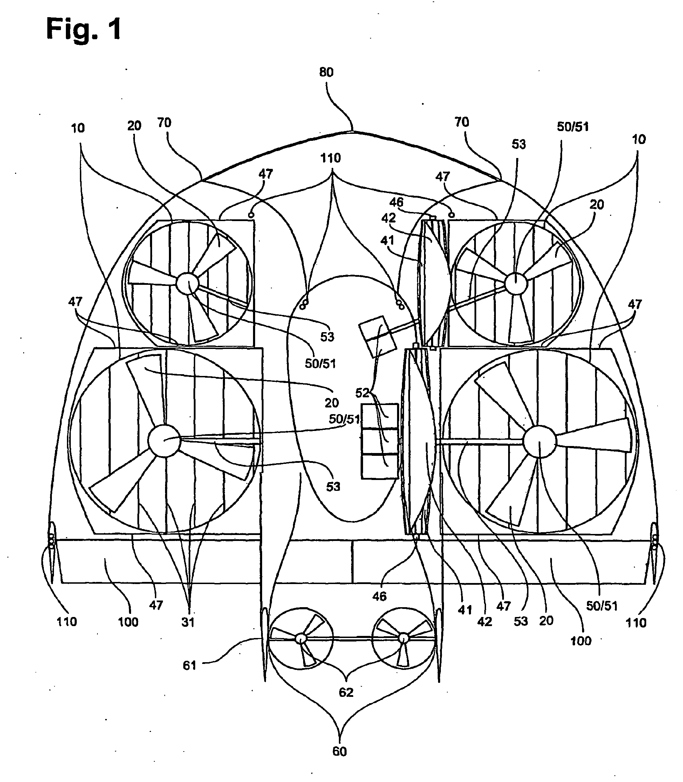

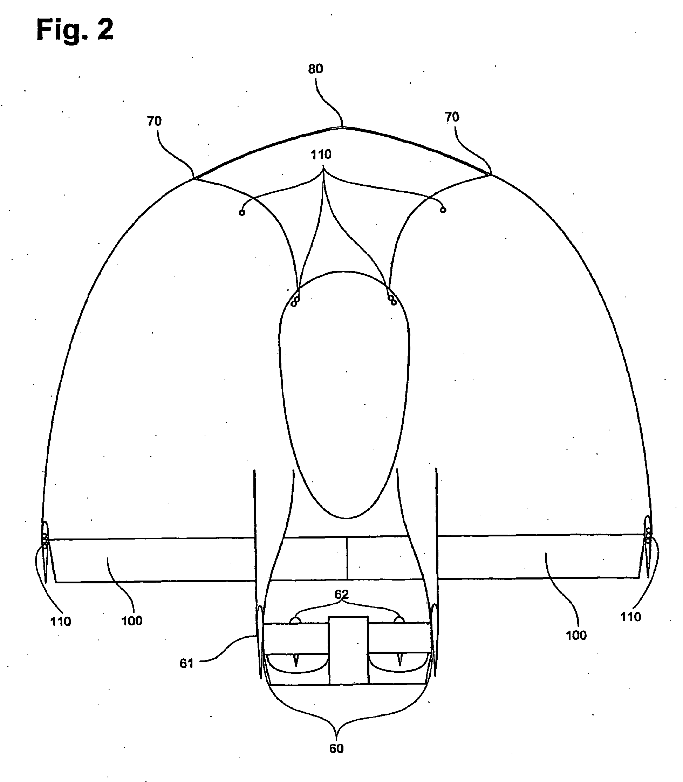

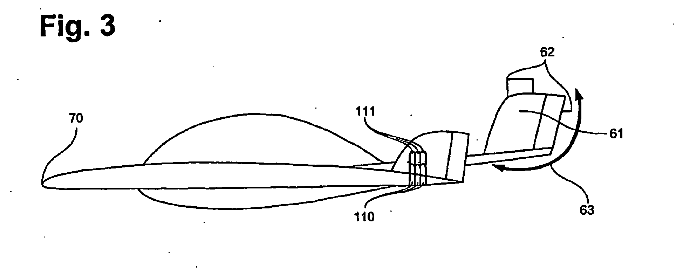

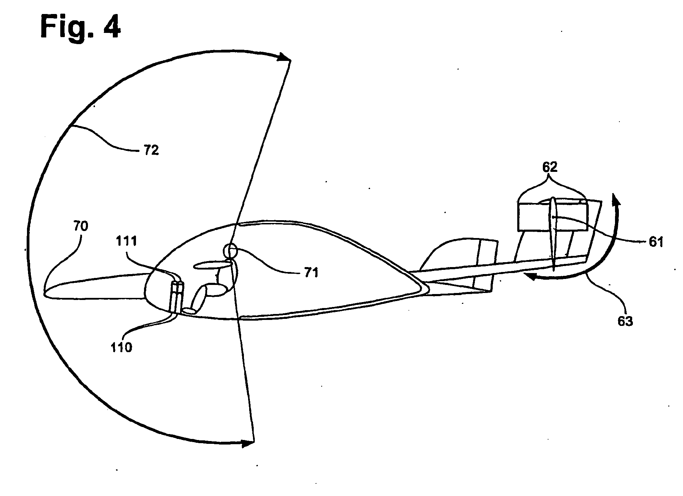

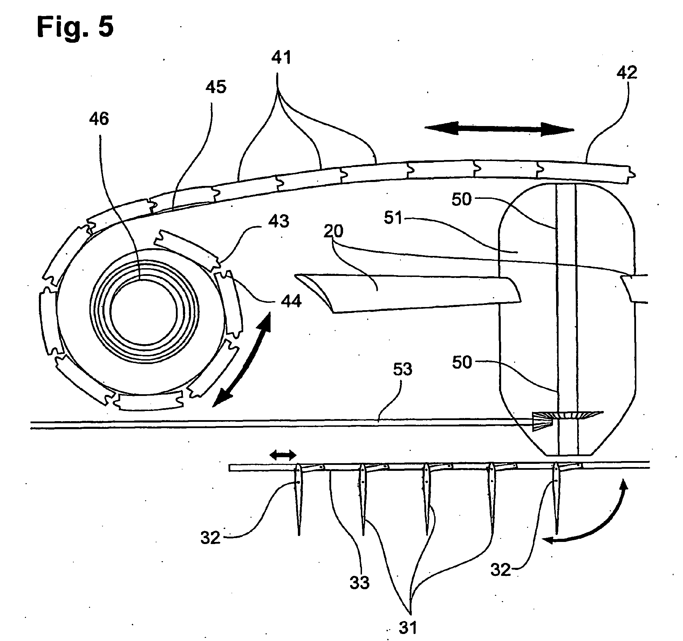

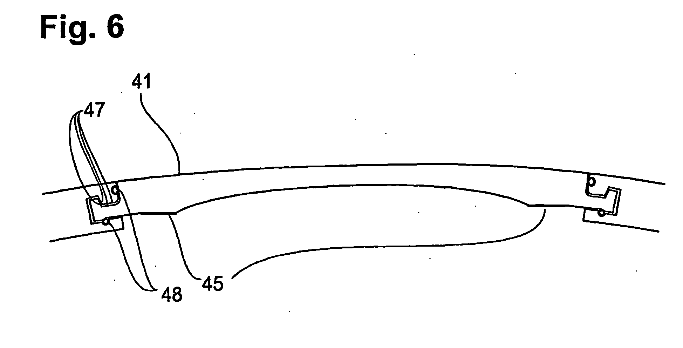

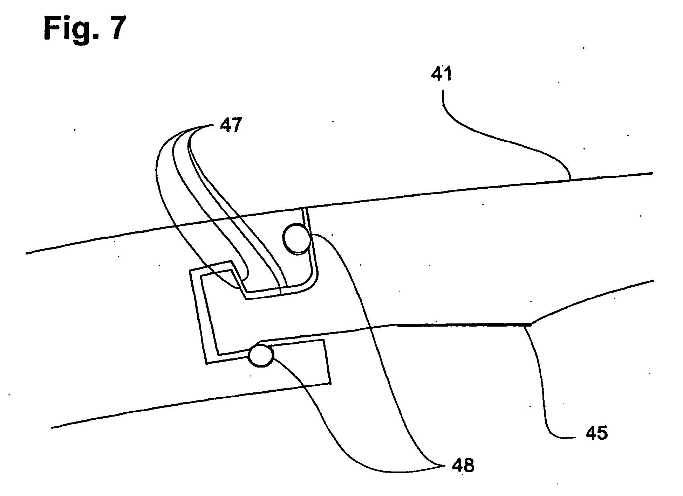

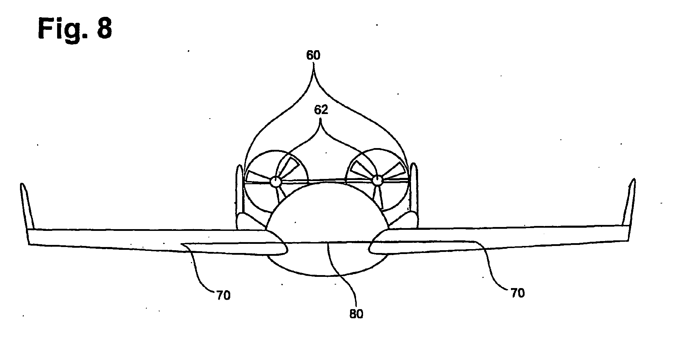

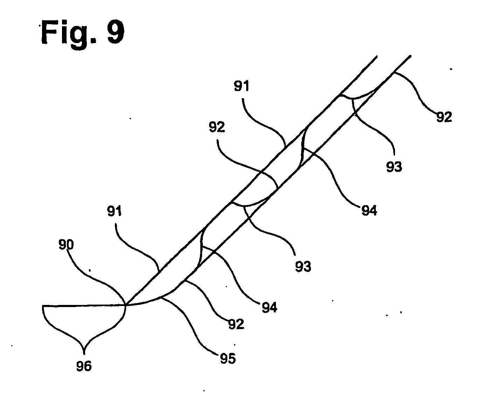

### Legende zu den Zeichnungen Fig. 1 - Fig. 9:

- **10**: **Tragflächenluken / Rotorenluken** welche Schwebeflugrotoren enthalten
- **20**: für Schwebeflug optimierte **Rotoren**
- **30**: **Lukenschliessmechanismus mit Längslamellen**
- 31: **Längslamelle**
- 32: **Rotationsachse** der Längslamelle
- 33: **Antriebsstange** für den Lamellenschwenkmechanismus
- **40**: **Rollo** bestehend aus mehreren Elementen
- 41: seitlich verschiebbares **Tragflächenelement**
- 42: **ä**usserstes **Tragflächenelement** welches nicht aufgewickelt werden muss
- 43: **Zahn** für guten Halt und Abdichtung der Elemente
- 44: **Spalt** passend zum Zahn des nächsten Elementes
- 45: **flexibles Band** für den Transport der Elemente
- 46: **Achse** für die Aufwicklung der Tragflächenelemente
- 47: **Gleitlager** / Kugellager / Magnetlager entlang der vorderen und hinteren Lukenkanten
- 48: Hydraulisch vergrösserbare **Dichtungsschläuche** / mechanisch verschiebbare Dichtungselemente entlang der Lukenkanten
- **50**: zentrale Rotorenachse
- 51: **zentraler Rotormotor**
- 52: **äusserer Rotormotor**
- 53: in Speiche laufende **Energieübertragung** von den äusseren Rotormotoren zur Rotorenachse
- 60: **schwenkbare Höhenruder-Antrieb-Kombination**
- 61: **Rotationsachse** der Höhenruder-Antrieb-Kombination
- 62: für Vorwärtsflug optimierter (Impeller-)**Antrieb / Propellergondel**
- 63: **Schwenkwinkel** der Höhenruder-Antrieb-Kombination
- **70**: **Tragflächenspitze**
- 71: Ungefähre Position der **Pilotenaugen** (im Schwebeflug Rückenlehne etwa senkrecht)
- 72: freier **Sichtwinkel** nach Unten-Vorne-Oben
- **80**: **Stangenspitze** gegen das Einhängen von Kabeln
- **90**: **Aufsetzpunkt für Vorwärtsfluglandung und für Schwebelluglandung**
- 91: Anflugbahn im Schwebeflug
- 92: Anflugbahn im Vorwärtsflug
- 93: Abbremsübergang Vorwärtsflug **->** Schwebeflug
- 94: Beschleunigungsübergang Schwebeflug -> Vorwärtsflug
- 95: Abfangbogen Vorwärtsfluglandung
- 96: Ausrollstrecke Vorwärtsfluglandung
- **100**: **Wölbklappe**-Querruderklappe-Kombination
- **110**: **Feststoffrakete als** Notfallenergie
- 111: Auslassöffnungen für brennende aber nicht mehr benötigte Feststoffraketen

### Zeichnungen

**Fig. 1** **Flugzeug** von Oben im **Schwebeflugmodus mit geöffneten Rotorluken** (10), Höhenruder-Antrieb-Kombination (60) nach unten geschwenkt, **rechte Hälfte** soweit **durchsichtig,** dass auch innen liegende Bestandteile der Erfindung sichtbar werden.
   (Die Speichen zur Befestigung der zentralen Rotormotoren (51) sind weggelassen)
**Fig. 2** **Flugzeug** von Oben im **Vorwärtsflugflugmodus** mit **geschlossenen Rotorluken** (10), Höhenruder-Antrieb-Kombination (60) nach hinten geschwenkt
**Fig. 3** **Flugzeug von der Seite** im Vorwärtsflugflugmodus (Höhenruder-Antrieb-Kombination nach hinten geschwenkt), mit schematischer Illustration des **Schwenkwinkels** (63) der Höhenruder-Antrieb-Kombination (60)
   (Die Stangenspitze (80) und das klassische Fahrwerk sind weggelassen, die V-Form der Flügel nicht dargestellt)
**Fig. 4** **Längsschnitt** durch die Mitte des **Flugzeuges,** mit schematischer Illustration des Schwenkwinkels (63) der Höhenruder-Antrieb-Kombination und des **Sichtwinkels** (72)
   (Die Stangenspitze (80) und das klassische Fahrwerk sind weggelassen, die V-Form der Flügel nicht dargestellt)
**Fig. 5** Schematischer (nicht massstäblicher) **Querschnitt** durch den unteren **Lukenschliessmechanismus** mit **Längslamellen** (40), den oberen Lukenschliessmechanismus mit dem **Rollo** (40) und den darauf angebrachten seitlich verschiebbaren Tragflächenelementen (41), sowie Illustration der Positionierung der **Schwebeflugrotoren** (20) und deren **Motoren** (51) dazwischen, auf der Höhe des flexiblen Bandes (45) für den Transport der Rollo-Elemente
   (Die Speichen zur Befestigung der zentralen Rotormotoren (51) sind weggelassen. Um massstäblich zum Flugzeug in den Fig. 1-4 zu passen, müsste die ganze Konstruktion dünner und die Rotoren (20) entsprechend länger sein.)
**Fig.6** Schematischer (nicht massstäblicher) **Längsschnitt** durch den **ob**e**ren Lukenschliessmechanismus** mit einem darauf angebrachten seitlich verschiebbaren Tragflächen-element (41) sowie der seitlichen Verankerung der Elemente (41) auf der Höhe der Rotorenluken (10)
   (Um massstäblich zum Flugzeug in den Fig. 1-4 zu passen, müsste die ganze Konstruktion dünner und das Element (41) entsprechend länger sein.)
**Fig.7** **Detail** des schematischen **Längsschnitts** (Fig. 6) durch den **oberen Lukenschliessmechanismus** (40) zur Illustration einer möglichen Anordnung des flexiblen Bandes (45), der Gleitlager (47) und der Dichtungselemente (48)
**Fig. 8** **Flugzeug von Vorne** im Vorwärtsflugflugmodus (Höhenruder-Antrieb-Kombination nach hinten geschwenkt) zur Illustration der um die Längsachse stabilisierenden V-Form der Flügel
   (Das klassische Fahrwerk ist weggelassen)
**Fig.9** Beispielhafter **Landeanflug im Schwebellugmodus** und im **Vorwärtsflugflugmodus** mit gemeinsamem Aufsetzpunkt. Sowie Illustration der Wechsel zwischen den Modus und entsprechend zwischen den parallelen Bahnen während des Anfluges
   (Der gemeinsame Anflugwinkel variiert je nach Dimensionierung des Flugzeuges)

### Weitere Details zur Ausführung der Erfindung:

Die Erfindung kann vom Fachmann entsprechend der obigen Beschreibung und der schematischen Zeichnungen als funktionstüchtiges Flugzeug gebaut werden.

Die Gewichtseinsparung ist für einen ökonomischen Betrieb wesentlich, es soll deshalb von möglichst optimalen modernen Werkstoffen profitiert werden, um das Gesamtgewicht zu reduzieren. Ebenfalls bei der Auswahl der Antriebsmotoren soll das Gesamtgewicht beachtet werden.

Es gilt zu beachten, dass die Schwerpunktbereiche für den Schwebeflug und den Vorwärtsflug entsprechend überlappen müssen.

Die Dimensionierung der Flügel, des Leitwerkes und des daraus folgenden zulässigen Schwerpunktbereiches, kann entsprechend der bekannten Theorien zur Flächenflugzeugauslegung geschehen. Es ist ein besonderes Augenmerk auf die, sich aus der Grösse der Flügelluken ergebende, Flügeltiefe zu legen, da eine erhöhte Flügeltiefe zu einer verstärkten Anstellwinkel-abhängigen Druckpunktwanderung (Druckpunkt der Hauptflügel) führt, weshalb die Dimensionierung des Höhenleitwerks entsprechend sorgfältig geschehen muss.

Für die Optimierung der Schwebeflugrotoren kann die entsprechende Literatur, insbesondere des Helikopterbaus, konsultiert werden. Beispielhaft sie nochmals das Buch von Walter Bittner ("Flugmechanik der Hubschrauber", ISBN 3-540-23654-6) erwähnt. Der passende Schwerpunktbereich im Schwebeflug lässt sich aus den Schwebeflugleistungen der Rotoren berechnen.

Für die Steuerung sowohl im Schwebeflug, als auch im Vorwärtsflug, vor allem aber auch bei den Übergängen, ist eine moderne Computersteuerung (mit den entsprechenden Sensoren) zu empfehlen. Falls nötig wirkt die Wölbklappe bei Ausschlag gegen oben, wie das hintere Teil eines sogenannten S-Schlagprofils (siehe Literatur zur Stabilisierung von Nurflüglerkonzepten) und kann somit allenfalls ebenfalls (neben dem Höhenleitwerk) zur Eigenstabilisierung der Längsachse verwendet werden. (Eine angepasste Dimensionierung des Höhenleitwerkes ist jedoch vorzuziehen.)

Drehrichtung der Rotoren: Entsprechend dem Stand der Technik ist es ein Vorteil, wenn der jeweils entlang der Längsachse gespiegelt liegende Rotor in die entgegengesetzte Richtung dreht. Dadurch entsteht bei gleichmässiger Belastung im Schwebeflug kein Rotationsmoment um die Hochachse. Beim Öffnen der Rollos im Vorwärtsflug ist davon auszugehen, dass die rechten Rotoren durch den Fahrtwind (von oben gesehen) im Uhrzeigersinn zu drehen beginnen (Linke Seite Gegenuhrzeigersinn). Es kann (je nach verwendeter Motorenart) von Vorteil sein, diese Drehrichtung der Rotoren im Schwebeflug vorzusehen.

## Patentansprüche

1. Ein Flugzeug, wobei, dass
a) sich in einem Teil, vorzugsweise der **Hälfte oder mehr** der **Flügelfläche** zwei, vorzugsweise vier oder mehrere **verschliessbare** vorzugsweise **runde Tragflächenluken (10) mit innenliegenden Schwebeflugrotoren (20)** befinden, welche je nach Bedarf vollständig geschlossen oder geöffnet werden können
und
b) der Lukenschliessmechanismus auf der **Tragflächenunterseite** enthält parallel entlang der Flugrichtung stehende, drehbare, **Längslamellen (31),** welche eine kontinuierlich und rasch modifizierbare Ablenkung der ausströmenden Luft nach links und rechts ermöglichen, als auch die vollständige Verschliessung der Luken (10) gegen unten
und
c) mit einem Höhenruder (60), welches nach hinten, oberhalb der Ebene der Haupttragflächen, vom Rumpf und den Haupttragflächen abgesetzt positioniert ist und sich daran **Antriebsgondeln (62),** mit Impellern, alternativ auch freie Propellern oder Strahlturbinen oder Raketendüsen, welche für den schnelleren Vorwärtsflug optimiert sind aber auch im Schwebeflug noch wirksam sind, befinden und das Höhenruder mit den Antriebsgondeln über senkrecht nach unten bis horizontal nach hinten um **mehr als 90°** um die Querachse **geschwenkt** werden kann, sodass der Ausstossstrahl weder die Haupttragflächen, noch den Rumpf oder andere aerodynamisch bedeutende Flugzeugteile überstreicht und auch der Luftansaugkegel die Aerodynamik kaum negativ beeinflusst.

2. Flugzeug nach Anspruch 1 mit einem Lukenschliessmechanismus auf der Tragflächen**oberseite** welcher ein **Rollo** (40) enthält mit mehreren, nach aerodynamischem Bedarf **gekrümmten, Elementen** (41), welche auf einem **flexiblen Band** (45) angebracht sind und im Schwebeflug, neben den Rotorluken (10) aufgerollt werden können. Für den Vorwärtsflug andererseits wird das Rollo abgerollt und somit die Elemente entlang der Lukenkanten herausgeschoben, oberhalb der Luke dicht zusammen geschoben.

3. Flugzeug nach Anspruch 1 mit einem Lukenschliessmechanismus auf der Tragflächen**oberseite** welcher mehrere, nach aerodynamischem Bedarf **gekrümmte, Elemente** (41) enthält, welche **einzeln** im Schwebeflug, neben den Rotorluken (10) versorgt werden können. Für den Vorwärtsflug andererseits werden die Elemente entlang der Lukenkanten herausgeschoben, oberhalb der Luke positioniert und zusammen geschoben.

4. Die Rotorantriebe, für die Rotoren (20) nach Anspruch 1, enthalten, je nach Leistungsbedarf, Zuverlässigkeit und Wärmeabführmöglichkeiten der verwendeten Antriebstechnologie, jeweils einen oder mehrere Elektro- und / oder Verbrennungsmotoren, wobei sich jeweils **ein Motor im Zentrum (51)** befindet und die **restlichen Motoren (52) ausserhalb** der Rotorfläche liegen und ihre Leistung per, durch die Speichen laufenden Wellen (53) (jeweils mit Kegel-/Tellerrad-Kombination), alternativ auch Ketten oder Keilriemen, übertragen.

5. Flugzeug nach Anspruch 1, mit zwei Tragflächen, **gekennzeichnet durch** eine ungewöhnlich grosse Flügeltiefe und **zwei Tragflächenspitzen (70),** welche seitlich neben dem Cockpitfenster nach vorne ragen; respektive einer **Sichtlücke** gegen vorne zwischen den Tragflächen.

6. Flugzeug nach Anspruch 1, **gekennzeichnet durch** eine **Stangenspitze (80),** respektive ein Bogen gegen vorne zwischen den zwei Tragflächenspitzen (70) nach Anspruch 5, welche weder die Sicht, noch die Aerodynamik wesentlich beeinträchtigt, aber bei **Kollisionen mit Kabeln** im Flug hilft und die **Cockpitverglasung** vor verdrängbaren Hindernissen beim Ausrollen und Manövrieren am Boden **beschützt.**

7. Flugzeug nach dem Anspruch 1 erlaubt, durch die kleine Flächenbelastung im Vorwärtsflug, ergänzt auch durch die freie Sicht nach vorne unten im Schwebeflug nach Anspruch 5, erlaubt denselben steilen Anflugwinkel im Landeverfahren in beiden Flugmodus, sodass **zwischen beiden Flugmodus gewechselt werden kann** und trotzdem jederzeit **derselbe Aufsetzpunkt (90)** angepeilt wird, allerdings im Gleitflug mit wesentlich kleinerem Anstellwinkel und entsprechend grösserer Sink- und Vorwärtsgeschwindigkeit wodurch bei der Gleitfluglandung eine relativ kurze Ausrollstrecke (96) benötigt wird, welche, durch den Einsatz der Rotoren (20) zum Aufsetzzeitpunkt, weiter stark minimiert werden kann.

8. Flugzeug nach Anspruch 1 **gekennzeichnet durch** grosse Querruder (100) am Ende der Haupttragflächen, welche als **Wölbklappen (100)** verwendet, nicht nur die Regulierung des Auftriebs erlauben, sondern auch einen langsamen Vorwärtsflug, beim Übergang vom Schwebeflug in den Vorwärtsflug, ohne oder mit einem minimalen Anstellwinkel des Rumpfes, sodass die, **durch** die Rotoren (20) in den Haupttragflächen nach Anspruch 1 erzeugten, Kräfte die Beschleunigung des Flugzeuges gegen vorne nicht abbremsen.

9. Flugzeug nach Anspruch 1 **gekennzeichnet durch** individuell zündbare und individuell **durch** die Auslassöffnungen (111) abstossbare **Feststoffraketen (110)** an verschiedenen Stellen am Flugzeug, so angebracht, dass sie eine entsprechende Kraft (im Verhältnis zum Flugzeugkoordinatensystem) nach oben und das individuelle Drehmoment erzeugen.

10. Flugzeug nach den Ansprüchen 1 und 2, ("Merkmal 5 = Tragflächenspitzen") mit zwei Tragflächen, **gekennzeichnet durch** eine ungewöhnlich grosse Flügeltiefe und zwei Tragflächenspitzen (70), welche seitlich neben dem Cockpitfenster nach vorne ragen; respektive einer Sichtlücke gegen vorne zwischen den Tragflächen.

11. Flugzeug nach den Ansprüchen 1, 2 und 10 **gekennzeichnet durch** eine Stangenspitze (80), respektive ein Bogen gegen vorne zwischen den zwei Tragflächenspitzen (70) nach Anspruch 10, welche weder die Sicht, noch die Aerodynamik wesentlich beeinträchtigt, aber bei Kollisionen mit Kabeln im Flug hilft und die Cockpitverglasung vor verdrängbaren Hindernissen beim Ausrollen und Manövrieren am Boden beschützt.

## Claims

1. An aircraft, comprising:
a) a part, preferably one half or more of the wing holds two, preferably four or more closable round wing hatches (10), with internal rotors (20) which accelerate air downwards, which can be fully closed or opened according to the needs
and
b) a wing hatch closure mechanism, which is positioned on the lower side of the wing, comprising of a set of longitudinal fins (31) extending parallel to the longitudinal axis of the aircraft, which turn around the longitudinal axis, which enable a continuous and rapidly modifiable deflection of the hatch exiting air to the left and right, said fins further capable of effecting a full closing of the wing hatches (10) towards the lower side of the wing
and
c) an elevator or stabilator (60), which is positioned in the rear, above the level of the main wings, separated from the fuselage and main wing of the aircraft, and which has attached gondolas holding thrust devices consisting of impellers (62), alternatively free propellers or jet turbines or rocket engines, which are optimized for fast cruise flight but are also effective in hover flight, and whereby the elevator or stabilator with the gondolas can be tilted from vertically down up to horizontal to the rear by more than 90 degrees around the cross-axis or lateral axis so that the air exit stream, exhaust jet stream or exiting air blast, neither touches the main wings nor the fuselage nor other aerodynamically important parts of the airplane, and whereby the air intake cones of the thrust devices do not affect the aerodynamics in a disadvantageous manner.

2. The aircraft of claim 1, wherein the wing hatch closure mechanism on the upper side of the wing comprises a roll-shutter (40), with plural elements (41) curved according to the aerodynamic needs, attached to a flexible band (45), configured to roll up on a spindle in the wing, aside of the wing hatch, for hover flight in order to open the wing hatch on top. Wherein for the cruise flight, the roll-shutter is unrolled and thus the elements slide along the hatch edges into their positions above the wing whereby they are pushed tight together, in order to close the wing hatch on top.

3. The aircraft of claim 1, wherein the wing hatch closure mechanism on the upper side of the wing comprises plural elements (41), curved according to the aerodynamic needs, which glide individually aside the wing hatch (10) to open the wing hatches for hover flight. For the cruise flight on the other hand, the elements are pushed out along the wing hatch edges to be positioned above the wing hatch and pushed together, in order to close the wing hatch on top.

4. The aircraft of claim 1, further comprising rotor drives for the rotors (20) comprising of one or more electric motors and / or combustion engines, depending on performance requirements, reliability and heat removal abilities of the chosen engine technology, with one engine situated in the centre (51), and the remaining engines (52) outside the rotor area, transferring their power to the central axis, through shafts inside spokes (53) (each with a bevel gear wheel/bevel gear wheel combination), alternatively with chains or belts.

5. The aircraft of claim 1, with two wing halfs, **characterized by** an unusually large wing chord and two wing tips (70), which point to the front aside of the cockpit window, respectively a gap between the front parts of the wings for unobstructed visibility.

6. The aircraft of claim 1, **characterized by** two connected bars shaping a vertex (80), respectively an arched bar, between the two front wing tips (70) according to claim 5, which neither obstructs the view nor the aerodynamics significantly, but prevents the aircraft from becoming hooked up in the event of a collision with cables in the air and helps protect the cockpit glass when manoeuvring and taxiing on the ground.

7. The aircraft of claim 1, due to the small wing loading in cruise flight enhanced by the unobstructed visibility to the front and down, enabled by claim 5, allows the same steep approach angle for both flight modes, so the pilot can switch at any time between the hover flight modus and the cruise flight modus and still aim and land on the same touch-down point, however, in cruise mode with much smaller angle of attack and correspondingly larger forward and descend speed resulting in the need of a short rolling distance when landing in cruise mode. This rolling distance in cruise mode landing can be minimized through the use of the rotors (20) at touch-down.

8. The aircraft of claim 1, **characterized by** large ailerons (100) at the trailing edge of the main wings, used as flaperons (100), which not only permit the regulation of the lift force, but also enables a slow flight, at the transition from hovering flight modus into the cruise flight modus, with a minimized angle of attack, so that the forces generated by the rotors (20) in the main wings according to claim 1, do not interfere with the acceleration of the aircraft.

9. The aircraft of claim 1, wherein are individually ignitable and individually, through the discharge outlets (111), releasable solid fuel rockets (110) at various points on the aircraft, so that they generate an upward force (in relation to the aircraft coordinate system) and an individual torque.

10. An aircraft according to claim 1 and to claim 2, with two wings, **characterized by** an unusually large wing chord and two wing tips (70), which point to the front aside of the cockpit window, respectively a gap between the front parts of the wings for unobstructed visibility.

11. An aircraft according to claim 1, claim 2 and claim 5, **characterized by** two connected bars shaping a vertex (80), respectively an arched bar, between the two front wing tips (70) according to claim 5, which neither obstructs the view nor the aerodynamics significantly, but prevents the aircraft from becoming hooked up in the event of a collision with cables in the air and helps protect the cockpit glass when manoeuvring and taxiing on the ground.

## Revendications

1. Un aéronef, comprenant:
a) une partie, de préférence la moitié ou plus de l'aile comprenant deux, à préférence quatre ou plus trous ronds refermables;
et lesdits trous contiennent des rotors internes (20) qui accélèrent l'air à travers l'aile vers le bas;
et les trous peuvent être entièrement fermés ou ouverts selon les besoins;
et
b) un mécanisme pour fermer les trous dans l'aile, qui est positionné sur la face inférieure de l'aile;
et ce mécanisme de fermeture comprend un ensemble d'ailettes (31) qui s'étendent parallèlement à l'axe longitudinal de l'avion et pivotent autour d'un axe parallèle à l'axe longitudinal de l'avion;
et ces ailettes permettent une déviation continue et rapidement modifiable de l'air traversant le trou vers la gauche et la droite;
et de plus ces ailettes sont capables d'effectuer une fermeture complète de la partie inférieure du trou dans l'aile (10);
et
c) une gouverne de profondeur ou une gouverne pendulaire (60), qui est positionnée à l'arrière, au-dessus du niveau de l'aile principale, séparée du fuselage et de l'aile principale de l'avion;
et à cette dite gouverne de profondeur ou gouverne pendulaire est attaché un dispositif de poussée comprenant une ou plusieurs hélices carénées (62), alternativement des hélices libres ou des turboréacteurs / jets ou des moteurs de fusée;
et ces équipements de poussée sont optimisés pour le vol de croisière rapide, mais sont également efficaces en vol stationnaire;
et de plus la gouverne de profondeur ou la gouverne pendulaire (60) peut être inclinée verticalement vers le bas jusqu'à l'horizontale à l'arrière par plus de 90 degrés autour de l'axe transversal;
et indépendant de l'inclinaison, le flux accéléré des dispositifs de poussée, n'est ni dans la direction de l'aile principale, ni dans la direction du fuselage, ni d'autres pièces aérodynamiquement importantes de l'avion; mais encore, l'aspiration de l'air à travers le dispositif de poussée n'affecte pas l'aérodynamique de l'aéronef de manière désavantageuse.

2. Le mécanisme de fermeture sur le côté supérieur des trous de l'aile de l'avion de la revendication 1 comprend un volet roulant (40), avec plusieurs éléments (41) incurvés selon les besoins aérodynamiques, rattachés à une bande flexible (45);
et pour le vol stationnaire, ledit volet roulant peut être enroulé sur un axe (46) dans l'aile, à côté du trou de l'aile, afin d'ouvrir la face du trou communiquant avec la face supérieure de l'aile;
et pour le vol de croisière, le volet roulant est déroulé et ainsi les éléments glissent le long des bords du trou (47) dans leurs positions sur la face supérieure de l'aile; en plus dans cette configuration déroulée, ces éléments sont maintenus serrés afin de fermer la face supérieure du trou dans l'aile.

3. L'avion de la revendication 1, comprenant un mécanisme de fermeture sur le côté supérieur des trous de l'aile comprenant plusieurs éléments (41), incurvés selon les besoins aérodynamiques, qui glissent individuellement à côté du trou dans l'aile (10) pour ouvrir le trou dans l'aile pour le vol stationnaire;
et pour le vol de croisière, d'autre part, les éléments sont poussés le long du bord du trou dans l'aile pour être positionnés au-dessus du trou dans l'aile et rapprochés, afin de fermer à la face supérieure le trou dans l'aile.

4. L'avion de la revendication 1, **caractérisé par** des entraînements pour les rotors (20), comprenant un ou plusieurs moteurs électriques et / ou moteurs à combustion, en fonction des exigences de performance, de la fiabilité et de la capacité de dissipation de la chaleur de la technologie de moteur choisie, avec un moteur situé en position centrale (51), et les autres moteurs (52), hors de la zone du rotor; et ces moteurs extérieurs transfèrent leur puissance à l'axe central à travers des arbres de transmission situés à l'intérieur des tubes de fixation (53) (chaque arbre avec un couple conique).

5. L'aile de l'avion de la revendication 1, **caractérisées par** une corde de l'aile exceptionnellement grande et deux extrémités d'aile (70) qui pointent vers l'avant à côté de la fenêtre du cockpit, respectivement formant un écart/espace libre vers l'avant entre les deux parties antérieures de l'aile (70) pour une visibilité dégagée.

6. L'avion de la revendication 1, **caractérisé par** deux barres reliées façonnant un sommet (80), respectivement une barre arquée, entre les deux bouts d'aile antérieurs (70) selon la revendication 5;
et lesdites barres n'obstruent ni la vue, ni l'aérodynamique de façon significative, mais empêchent l'avion de s'accrocher dans le cas d'une collision avec des câbles dans l'air;
et en outre, lesdites barres aident à protéger le verre du cockpit lors des manoeuvres et du roulage sur le sol.

7. L'avion de la revendication 1, en raison de sa petite charge alaire en vol de croisière et de la visibilité dégagée à l'avant et vers le bas permise par la revendication 5, permet le même angle d'approche raide pour les deux modes de vol (1. sustentation motorisée, trous ouverts / 2. sustentation aérodynamique, trous fermés) de vol;
et par conséquent, le pilote peut changer à tout moment entre les modes de vol et toujours atterrir sur le même point d'atterrissage (90);
mais en mode sustentation aérodynamique, l'avion vole avec un angle d'attaque beaucoup plus petit correspondant à de plus grandes vitesses d'avance et de descente;
et par conséquent, en mode sustentation aérodynamique à l'atterrissage il en résultera la nécessité d'une courte distance de roulement;
et cette distance de roulement à l'atterrissage en mode sustentation aérodynamique peut être minimisée par l'utilisation des rotors (20) au moment où les roues touchent le sol.

8. L'avion de la revendication 1 **caractérisé par** des ailerons de grande taille (100) au bord de fuite de l'aile principale, utilisés aussi comme volets de courbure (100);
et lesdits volets de courbure ne permettent pas seulement la régulation de la force de portance, mais aussi permettent un vol lent, avec un angle d'attaque minimal;
et en raison de cet angle d'attaque minimal pendant la transition du mode du vol sustentation motorisée vers le mode sustentation aérodynamique pour la croisière, les forces générées par les rotors (20) dans l'aile principale selon la revendication 1, n'interférent pas avec l'accélération de l'avion.

9. L'avion de la revendication 1, **caractérisé par** des fusées à propergol solide qui sont individuellement allumables; celles-ci fusées sont positionnées à différents points sur l'avion, de sorte qu'elles génèrent une force ascendante (en relation avec le système de coordonnées de l'avion) et des couples de rotation particuliers;
et de plus, lesdites fusées peuvent être lâchées individuellement par les sorties de décharge (111).

10. L'aile de l'avion, selon la revendication 1 et la revendication 2, **caractérisées par** une corde de l'aile exceptionnellement grande et deux extrémités d'aile (70) qui pointent vers l'avant à côté de la fenêtre du cockpit, respectivement formant un écart/espace libre vers l'avant entre les deux parties antérieures de l'aile pour une visibilité dégagée.

11. Un avion, selon la revendication 1, 2 et 5, **caractérisé par** deux barres reliées façonnant un sommet (80), respectivement une barre arquée, entre les deux bouts d'aile antérieurs (70) selon la revendication 5; et lesdites barres n'obstruent ni la vue, ni l'aérodynamique de façon significative, mais empêchent l'avion de s'accrocher dans le cas d'une collision avec des câbles dans l'air;
et en outre lesdites barres aident à protéger le verre du cockpit lors des manoeuvres et du roulage sur le sol.
